Europäisches Patentamt

European Patent Office

Office européen des brevets

(11) Numéro de publication: **0 088 706**
**A1**

# DEMANDE DE BREVET EUROPEEN

(21) Numéro de dépôt: **83400512.6**

(22) Date de dépôt: **14.03.83**

(51) Int. Cl.³: **F 16 L 59/14**

(30) Priorité: **12.03.82 FR 8204176**

(43) Date de publication de la demande: **14.09.83**
**Bulletin 83/37**

(84) Etats contractants désignés: **DE GB IT NL**

(71) Demandeur: **OMNIUM TECHNIQUE DES TRANSPORTS PAR PIPELINES, 5 rue Chante-Coq B.P. 91, F-92801 Puteaux (FR)**

(72) Inventeur: **Mialon, Jean-Jacques, 6, rue des Anémones Saint-Ay, F-45130 Meung-sur-Loire (FR)**

(74) Mandataire: **Arnaud, Jean Pierre Alfred, 94 rue Saint Lazare, F-75009 Paris (FR)**

(54) **Procédé de construction de canalisation et ancrage.**

(57) L'invention concerne une canalisation comportant un tube (10) ancré à une gaine (12). La canalisation comporte des ancrages dans lesquels un anneau de compression (26) est serré entre une butée interne (14) solidaire d'un tube interne (10) et une butée externe (20) solidaire d'une gaine (12). Cet anneau de compression (26) a de bonnes propriétés d'isolation thermique et de résistance à la compression. Des efforts longitudinaux considérables peuvent ainsi être transmis entre le tube (10) et la gaine (12). L'invention convient à la réalisation de canalisations sous-marines pour le transport de produits froids tels que le gaz naturel liquéfié, et le gaz de pétrole liquéfié.

Procédé de construction de canalisation et ancrage.

La présente invention concerne une canalisation isolée comportant des ancrages isolants, un procédé de construction d'une telle canalisation, ainsi que des ancrages isolants d'un tube et d'une gaine de canalisation.

L'invention se rapporte de façon générale au domaine du transport des fluides à des températures différentes de la température ambiante, c'est-à-dire de la température à l'extérieur d'une canalisation. Bien qu'elle s'applique à des canalisations ayant un tube et une gaine séparés par un isolant, dans lesquelles le tube est plus chaud que la gaine, on considère dans la suite du présent mémoire une application particulière dans laquelle le fluide qui circule à l'intérieur du tube interne est plus froid que la gaine.

Plus précisément, l'invention est particulièrement utile dans son application au transport des fluides froids ou "cryogéniques" et notamment au transport du gaz de pétrole liquéfié et du gaz naturel liquéfié. Les températures de transport de ces fluides sont de l'ordre de - 50°C et - 160°C respectivement. Dans le cas d'autres fluides, les températures peuvent être beaucoup plus basses et, par exemple, l'invention peut être mise en oeuvre pour le transport de l'air liquide et des gaz liquéfiés et analogues. La pression d'utilisation de telles canalisations atteint couramment plusieurs dizaines de bars. Cependant, l'invention convient aussi à des applications dans lesquelles la pression à l'intérieur du tube dépasse 100 bars.

Le brevet des Etats-Unis d'Amérique n° 4 219 224 décrit une canalisation isolée comprenant un tube interne et une gaine. Chaque tronçon de canalisation est formé d'un tronçon de tube, d'un tronçon de gaine plus court que le tronçon de tube, et de deux cônes de liaison soudés à la gaine et exerçant des forces de compression longitudinale du tronçon de tube, des anneaux isolants étant comprimés entre des butées annulaires dépassant du tube interne et des butées alignées axialement sur les premières et solidaires des cônes. Les tronçons de canalisation ainsi formés sont soudés bout à bout par leurs tubes internes et une manchette rapportée en deux parties au moins relie les tronçons de gaine des tronçons voisins de canalisation.

La compression du tube interne assurée par la gaine, à chaque tronçon, doit être suffisante pour que, lorsqu'un fluide froid circule dans le tube, celui-ci soit de moins en moins en compression, mais sans mettre les tronçons de gaine en tension.

Cette canalisation présente de nombreux inconvénients. D'abord, chaque tronçon de tube dont la longueur est en général d'environ 10 à 15 m, nécessite un ancrage à chaque extrémité ; les tronçons de canalisation sont donc très onéreux. Ensuite, la fabrication des tronçons de canalisation est compliquée car la soudure du second cône doit être effectuée pendant que l'ensemble est mis sous contrainte par un dispositif mécanique puissant. Cette fabrication doit donc être réalisée en atelier. Enfin, lorsque les manchettes sont soudées aux extrémités des tronçons de canalisation, l'isolant qui se trouve à l'intérieur de la gaine, à proximité de la surface de soudage, est détérioré et forme des cavités qui réduisent les propriétés isolantes.

L'invention concerne une canalisation ne présentant pas ces inconvénients. Elle est montée progressivement par utilisation de simples tronçons de tube et de gaine. L'ancrage du tube et de la gaine n'est assuré qu'en des points très éloignés, de plusieurs kilomètres dans certaines installations. L'isolant n'est pas détérioré, si bien que, sur toute sa longueur, la canalisation a de bonnes propriétés d'isolation.

Plus précisément, l'invention concerne un procédé de construction de canalisation isolante comprenant un tube interne et une gaine métalliques et concentriques séparés par un isolant thermique ; ce procédé comprend :

- la formation d'une amorce de canalisation constituée par un ancrage isolant de la gaine et du tube, cet ancrage comportant au moins une butée interne solidaire du tube et distante de la gaine, au moins une butée externe solidaire de la gaine et distante du tube, les parties externes de la butée interne étant radialement à l'extérieur par rapport aux parties internes de la butée externe, et au moins un organe de compression formé d'une matière possédant de bonnes propriétés d'isolation thermique et une bonne résistance à la compression, et disposé au contact des butées internes et externes suivant des surfaces sensiblement radiales, le tube de l'ancrage dépassant de la gaine du côté où la canalisation doit être construite,

- le raccordement d'un tronçon de tube interne au tube interne qui dépasse de l'ancrage,

- le raccordement d'un tronçon de gaine à la gaine de l'ancrage, concentriquement au tronçon de tube interne, le tronçon de gaine ayant sensiblement la même longueur que le tronçon de tube interne, si bien que ce dernier dépasse du tronçon de gaine,

- la formation d'une isolation thermique entre le tronçon de tube interne et le tronçon de gaine, jusqu'à proximité de l'extrémité du tronçon de gaine, puis

- la répétition des opérations de raccordement de tronçons de tube interne et de gaine et de formation d'une isolation thermique,

- le raccordement, à l'extrémité du tronçon de tube interne, du tube interne d'un autre ancrage isolant analogue à l'ancrage isolant qui forme l'amorce de canalisation,

- le raccordement d'un tronçon de gaine en au moins deux parties à l'extrémité du tronçon de gaine de la canalisation et à l'extrémité de la gaine de l'ancrage, et

- la formation d'une isolation thermique entre le tube interne et le tronçon de gaine en au moins deux parties.

Il est avantageux que les opérations de raccordement soient effectuées par soudage. Le raccordement des tronçons de gaine peut cependant être assuré par des raccords mécaniques, par exemple à brides ou vissés.

L'invention concerne ainsi un ancrage isolant d'un tube et d'une gaine métalliques et pratiquement concentriques, destiné à la mise en oeuvre du procédé précédent, cet ancrage comprenant une butée interne solidaire du tube et distante de la gaine, deux butées externes solidaires de la gaine et distantes du tube, les parties externes de la butée interne étant radialement à l'extérieur par rapport aux parties internes des butées externes, et deux organes de compression formés d'une matière possédant de bonnes propriétés d'isolation thermique et une bonne résistance à la compression, et disposés chacun au contact de la butée interne et d'une butée externe.

L'invention concerne aussi un ancrage isolant d'un tube et d'une gaine métalliques et pratiquement concentriques, destiné à la mise en oeuvre du procédé indiqué précédemment et comprenant deux butées internes solidaires du tube et distantes de la gaine, une butée externe solidaire de la gaine et distante du tube, les parties externes des butées internes étant radialement à l'extérieur par rapport aux parties internes de la butée externe, et deux organes de compression formés d'une matière possédant de bonnes propriétés d'isolation thermique et une bonne résistance à la compression, et disposés au contact des butées internes et externe.

Il est avantageux que les surfaces de contact de chaque organe de compression avec une butée interne ou une butée externe soient des parties de surfaces ayant des génératrices sensiblement radiales. Par exemple, chaque surface de contact d'un organe de compression et d'une butée est comprise dans un plan transversal.

Dans une variante, les butées interne et externe comportent chacune plusieurs secteurs de couronne circulaire, régulièrement espacés en direction circonférentielle, la totalité des secteurs d'une butée recouvrant au maximum 180°.

Dans une autre variante, les butées et l'organe de compression sont continus autour de la circonférence du tube et de la gaine.

Il est avantageux que la matière possédant de bonnes propriétés d'isolation thermique et une bonne résistance à la compression, formant l'organe de compression, soit constituée par une mousse syntactique.

L'invention concerne aussi une canalisation comprenant un tube et une gaine métalliques et pratiquement concentriques, séparés par un isolant thermique, réalisée par mise en oeuvre du procédé précédent et comportant au moins deux ancrages isolants destinés à résister aux contraintes longitudinales, et l'élément choisi parmi le tube et la gaine et qui est destiné à être le plus froid de ces deux éléments lors de l'utilisation prévue est formé d'un métal résilient à la température d'utilisation.

Il est avantageux que les ancrages isolants soient des ancrages du type précité. Il est en outre avantageux que la gaine comporte aussi, à l'extérieur, une couche de protection contre la corrosion par le milieu marin, et un lest à base de béton.

D'autres caractéristiques et avantages de l'invention ressortiront mieux de la description qui va suivre, faite en référence aux dessins annexés sur lesquels :

la figure 1 est une perspective avec des parties arrachées d'un ancrage selon l'invention dont les organes de compression ont été retirés ;

la figure 2 est analogue à la figure 1 mais représente les organes de compression en place dans l'ancrage;

la figure 3 est une coupe partielle d'une partie de l'ancrage de la figure 2, avec des éléments supplémentaires utilisés lorsque l'ancrage est incorporé à une canalisation sous-marine ;

les figures 4 à 6 sont des coupes schématiques illustrant la fabrication d'un ancrage selon l'invention ;

les figures 7 à 9 sont des coupes schématiques analogues aux figures 4 à 6 et représentant la réalisation d'un ancrage multiple selon l'invention ; et

la figure 10 est une coupe à petite échelle illustrant la mise en oeuvre du procédé de construction selon l'invention.

On considère maintenant un ancrage selon l'invention, particulièrement bien adapté à la réalisation de canalisations sous-marines utilisées pour le transport

de gaz naturel liquéfié ou d'un fluide analogue.

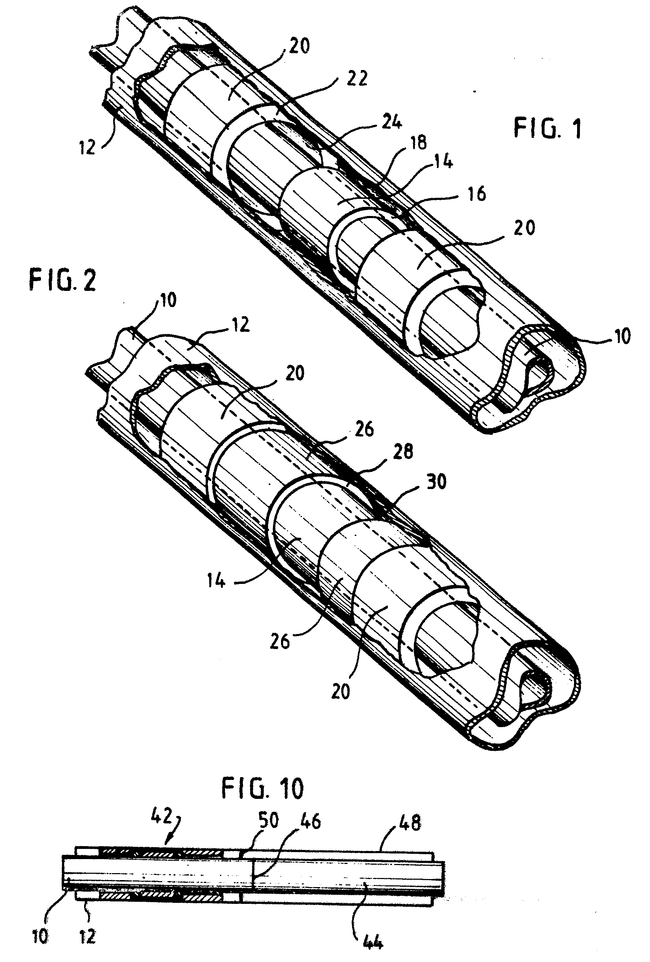

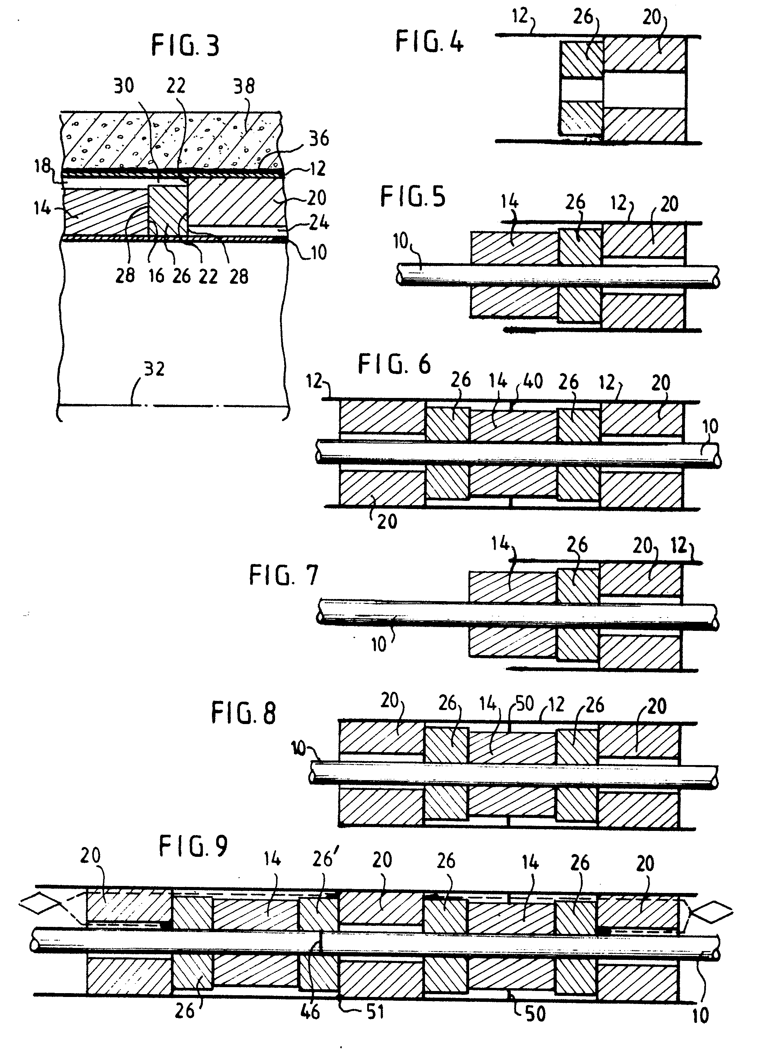

Un tube interne 10 est destiné à contenir le fluide froid à transporter. Il est entouré par une gaine 12. Les tronçons de canalisation, entre les ancrages, ne comportent que le tube 10 et la gaine 12, avec un isolant intermédiaire et éventuellement, comme décrit plus en détail dans la suite en référence à la figure 3, une protection contre la corrosion par l'eau de mer et un lest. Ces dernières caractéristiques ne sont pas représentées sur les figures 1 et 2 sur lesquelles la distance séparant le tube interne 10 et la gaine 12 a été exagérée. La figure 3 représente mieux la disposition relative réelle.

Le tube interne 10 porte un anneau continu 14 qui lui est solidaire. Cet anneau constitue une butée ayant deux faces de butée 16, formées dans des plans sensiblement transversaux à l'axe longitudinal du tube et de la gaine qui sont concentriques, une seule de ces surfaces 16 apparaissant sur la figure 1. Selon une caractéristique importante de l'invention, cet anneau 14 de butée est distant de la gaine métallique, comme indiqué par la référence 18. Le tube interne 10 et éventuellement l'anneau de butée 14, sont avantageusement formés d'un acier résilient, par exemple un acier ferritique à teneur élevée en nickel. Les aciers inoxydables des types 316 et 317 conviennent à cet effet.

La gaine 12 comporte, à sa paroi interne, deux anneaux de butée 20 qui délimitent des faces de butée 22 disposées dans des plans sensiblement transversaux à l'axe longitudinal du tube et de la gaine. Les faces internes des butées sont distantes du tube interne 10, comme l'indique la référence 24 sur la figure 1. La gaine 12 est avantageusement formée d'un acier ordinaire de bonne qualité, d'un type couramment utilisé dans les applications marines.

La figure 1 représente tous les éléments qui sont bons conducteurs de la chaleur. On note que, étant donné que le tube interne 10 et la gaine 12 sont concentriques et qu'il reste un espace entre l'anneau 14 et la gaine et entre les anneaux 20 de butée et le tube, il n'existe aucun contact entre des éléments métalliques destinés à être à des températures différentes. Dans la suite du présent mémoire, l'anneau 14 de butée est appelé "butée interne" et les anneaux 20 de la gaine sont appelés "butées externes" étant donné que les anneaux 20 se trouvent plus à l'extérieur que l'anneau 14.

La figure 2 est analogue à la figure 1 mais représente en plus des anneaux de compression 26 placés entre les anneaux de butée 14 et 20. Dans le mode de réalisation représenté, chaque anneau 26 est continu circonférentiellement et a deux faces 28 de butée sensiblement transversales à l'axe longitudinal du tube et de la gaine et destinées à venir au contact d'une surface 16 de butée de l'anneau interne 14 et d'une surface 22 de butée d'un anneau externe 20. Le montage du dispositif d'ancrage est réalisé, comme décrit dans la suite, de manière qu'il n'y ait pas de jeu entre les différents anneaux, à température ambiante, si bien que les différents éléments peuvent garder les positions indiquées sur la figure 2. En outre, une mousse isolante est injectée dans l'espace délimité entre les anneaux 14 et 26 d'une part et la gaine d'autre part afin que les anneaux 26 et le tube interne 10 restent concentriques à la gaine 12. Les anneaux 26 travaillent donc à la compression. En effet, ils sont destinés à transmettre à la gaine 12 les forces longitudinales appliquées au tube interne 10. Il est donc important que les surfaces de contact mutuel des surfaces de butée 16, 28 d'une part et des surfaces de butée 22, 28 d'autre part soient aussi grandes que possible. La figure 3 indique ainsi que l'anneau 26 de compression, qui a un diamètre interne sensiblement égal à celui de l'anneau de butée 14, présente de grandes surfaces de contact avec les deux anneaux 14 et 20. Cependant, étant donné que les forces qui doivent être transmises peuvent être très élevées, il faut que l'anneau 26 soit formé d'une matière qui non seulement présente de bonnes propriétés d'isolation thermique mais encore possède une bonne résistance à la compression.

On constate qu'il est avantageux que les anneaux 26 soient formés d'une mousse syntactique. Une telle matière à base d'un liant de résine époxy et de microsphères creuses de verre, est disponible auprès de la Société Nationale des Poudres et Explosifs. Elle peut résister à une pression élevée.

Bien qu'on ne l'ait pas représenté sur les figures 1 à 3, un isolant thermique est avantageusement placé dans les espaces 18 et 24 séparant des éléments métalliques en regard. Il s'agit notamment d'une matière d'isolation couramment utilisée à cet effet, telle qu'une mousse epoxy rigide, ayant par exemple une masse volumique apparente de 450 $kg/m^3$.

La figure 3 indique que la gaine 12 peut être revêtue extérieurement d'une couche 36 de protection contre la corrosion, par exemple d'un type connu à base de bitume. Cette couche est elle-même entourée d'un lest 38 de béton.

On considère maintenant, en référence aux figures 4 à 6, la fabrication d'un ancrage tel que représenté sur les figures 1 à 3. Un tronçon de la gaine 12, ayant une longueur sensiblement égale à la moitié de celle de la gaine de l'ancrage et muni d'une butée interne 20, est préparé par exemple par moulage ou par soudage de l'anneau 20 de butée à l'intérieur de la gaine 12. Un tel soudage ne pose pas de problèmes particuliers étant donné que les matières de la gaine et de l'anneau de butée peuvent être identiques. Ensuite, un anneau 26 de compression peut être présenté contre une face de l'anneau 20 de butée, et un tronçon 10 de tube interne est introduit dans l'anneau 26 de compression et dans l'anneau 20 de butée. L'anneau 26 peut aussi être disposé d'abord sur le tube 10. Le tube 10 est maintenu dans un dispositif de centrage qui le maintient concentriquement à la gaine 12. Ensuite, comme indiqué sur la figure 6, un second anneau de compression 26 est glissé sur le tube 10 et un second tronçon de gaine 12, analogue au premier, c'est-à-dire comportant un anneau 20 de butée, est glissé sur le tube 10. Les dimensions sont telles que le tube 10 dépasse de la gaine 12 aux deux extrémités. Un dispositif de montage qui maintient le tube et la gaine afin qu'ils soient concentriques exerce alors une force choisie de compression en direction longitudinale afin que les deux anneaux de compression 26 soient bien serrés entre les butées 14 et 20. Lorsqu'une telle force est appliquée, une soudure 40 est réalisée tout autour des deux tronçons de gaine 12 afin qu'ils ne forment plus qu'un seul tronçon. Ensuite, par l'intermédiaire d'orifices initialement percés dans les butées externes 20 en direction axiale, un mélange réactif destiné à former un isolant thermique est introduit dans l'espace compris entre les anneaux 14 et 26 et la gaine 12.

Il est préférable que, lors de la mise en oeuvre du procédé précédent, les surfaces de butée des différents anneaux soient usinées afin qu'elles soient bien planes et bien perpendiculaires à l'axe longitudinal du tube et de la gaine.

Dans un exemple d'application, le tube interne 10 a un diamètre d'environ 60 cm. Son épaisseur est de l'ordre de 6 à 12 mm. La gaine 12 a un diamètre de 80 cm environ. Son épaisseur est d'environ 10 à 20 mm. L'épaisseur des anneaux 26 de compression, mesurée parallèlement à l'axe de l'ancrage, est de l'ordre de 10 cm.

La figure 7 est un schéma illustrant les différentes étapes de la réalisation d'un ancrage capable de supporter des efforts plus importants grâce à son plus grand nombre de surfaces de butée. Dans une première étape, on enfile sur un tube 10 de longueur suffisante, d'un côté de la butée interne 14, un anneau de compression 26 puis un élément de gaine 12 de longueur telle que le tube 10 dépasse de la gaine d'un côté et que l'autre extrémité de la gaine est à la moitié de la butée 14. La butée externe 20 de la gaine 12 est mise en butée contre l'anneau de compression 26 et l'ensemble est maintenu en position concentrique au tube 10.

Dans une seconde étape, on enfile, sur le tube 10, de l'autre côté, un anneau de compression 26 suivi d'une gaine 12 munie d'une butée externe 20. La longueur de la gaine 12 est telle que, d'un côté, elle peut être soudée en bout du tronçon de gaine 12 déjà mis en place dans la première étape, et de l'autre côté, son extrémité est en retrait par rapport au tube 10 et se trouve pratiquement au niveau de la surface de la butée 20. Après serrage des deux anneaux de compression 26 entre les deux butées externes 20, le cordon de soudure 50 peut être réalisé entre les deux tronçons de gaine.

Dans la troisième étape, un autre tronçon de tube 10 muni de sa butée interne 14 est soudé au tronçon déjà en place. Un anneau de compression 26' formé de deux demi-coquilles est alors introduit à force entre les butées 14 et 20. Un anneau de compression 26 puis un tronçon de gaine 12 ayant une butée 20 sont enfilés sur le tube 10. Les tronçons de gaine sont alors soudés en 51, après protection de l'anneau 26 le plus proche.

Ces étapes peuvent être répétées jusqu'à obtention du nombre de surfaces de butées nécessaires.

L'introduction de l'isolant dans les espaces séparant le tube, la gaine et les anneaux de compression dans les ancrages est assurée par des trous axiaux formés dans les butées. Ainsi, sur la figure 9, les losanges désignent les entrées d'un mélange qui est introduit par les trajets indiqués en traits interrompus. Le mélange forme une mousse isolante in situ.

Une canalisation de transport, par exemple de gaz naturel liquéfié, réalisée selon l'invention, comporte au moins deux ancrages disposés à des emplacements déterminés le long d'une canalisation. Celle-ci comporte un tube interne continu 10, une gaine métallique externe continue 12 et, entre les deux, un isolant thermique, par exemple une mousse epoxy ou de polyuréthanne ayant une masse volumique apparente de 70 kg/m$^3$. Etant donné la présence des ancrages dans la canalisation, lorsque le tube 10 contient un fluide froid tel que du gaz naturel liquéfié, il a tendance à se rétrécir. Cependant, comme les ancrages le retiennent à ses deux bouts, cette tension longitudinale se transforme en une compression longitudinale de la gaine 12. Si la canalisation est rectiligne sur de grandes longueurs, les ancrages peuvent être espacés. Si cependant la canalisation a un parcours sinueux, par exemple lorsqu'elle est posée sur un fond marin irrégulier, les ancrages doivent être plus proches.

La fonction essentielle des ancrages est la retenue du tube interne à une longueur déterminée en cas de rupture de la canalisation, d'un côté ou de l'autre d'un ancrage. Par exemple, si un ancrage tel que celui qui est représenté sur la figure 6 est monté dans une canalisation entre deux autres ancrages distants, et si une partie de la canalisation vient à céder, seul le tronçon compris entre deux ancrages et dans lequel la canalisation a cédé doit être réparé ou remplacé. En l'absence des ancrages, toute la canalisation devrait être réparée. Cependant, les ancrages ont d'autres fonctions. D'abord, ils centrent le tube et la gaine afin qu'ils restent concentriques. Si les ancrages sont très éloignés et si le trajet de la canalisation est sinueux, des entretoises convenables sont placées sur la longueur de la canalisation afin qu'elles assurent un centrage, c'est-à-dire qu'elles subissent des efforts uniquement en direction latérale. Toute matière isolante ayant une bonne résistance à la compression peut être utilisée à cet effet. La mousse syntactique décrite pour la réalisation des anneaux 26 de butée convient évidemment à cet effet.

En outre, les ancrages, du fait de leur fonction de centrage, évitent l'écrasement de l'isolant placé entre le tube et la gaine. L'isolant est choisi en fonction de ses propriétés d'isolation et de commodité de mise en place.

Le nombre d'ancrages le long de la canalisation dépend donc essentiellement de la sécurité que l'on souhaite obtenir en cas de rupture de la canalisation.

On a indiqué que les surfaces de contact des anneaux de butée et des anneaux de compression étaient comprises dans un plan transversal et étaient continues circonférentielle- ment. Cependant, ces caractéristiques ne sont pas indispensables. Dans une variante, les surfaces peuvent ne pas être continues. Par exemple, il peut être souhaitable que les

0088706

butées qui ne sont pas alors sous forme d'anneaux, constituent des secteurs de couronne circulaire, régulièrement espacés circonférentiellement d'une manière telle que les secteurs d'une butée recouvrent au maximum 180˘. De cette manière, les différents anneaux peuvent être enfilés longitudinalement puis tournés de l'angle convenable afin qu'ils soient en contact mutuel. Cette caractéristique a l'inconvénient de diviser par deux l'étendue des surfaces de contact, mais présente l'avantage, surtout dans le cas des ancrages multiples, de simplifier la construction.

Dans une autre variante, les surfaces de contact, continues ou non, tout en ayant des génératrices radiales, peuvent ne pas être contenues dans un même plan. Ainsi, une surface de butée d'un anneau de butée, par exemple une surface 16, peut avoir des cavités et la surface complémentaire 28 d'un anneau de compression peut avoir des saillies de forme complémentaire de celle des cavités. Lorsque les faces de butée sont en contact, aucun mouvement de rotation n'est possible entre les deux anneaux correspondants. Une telle disposition peut être utilisée lorsque le tube et la gaine doivent être bloqués en rotation.

On considère maintenant la construction d'une canalisation selon l'invention, en référence à la figure 10, destinée à titre illustratif à être posée au fond de la mer.

On suppose que la construction d'une telle canalisation commence à un ancrage 42, par exemple tel que représenté sur la figure 6, dont le tube interne 10 dépasse de la gaine. Un tronçon 44 de canalisation, de longueur déterminée, par exemple de 12 m, est présenté à l'extrémité du tube interne 10, et il y est soudé comme indiqué par la référence 46. Un tronçon 48 de gaine, de même longueur que le tronçon 44 de tube interne, est alors enfilé sur ce tronçon 44 de manière que son extrémité se trouve en face de l'extrémité de la gaine de l'ancrage 42. Il est alors soudé comme indiqué par la référence 50. Les deux tronçons 44 et 48 de tube et de gaine étant toujours maintenus concentriques, un isolant thermique est placé entre eux. Par exemple, une mousse de polyuréthanne est formée in situ, presque jusqu'à l'extrémité de la gaine 48.

L'opération recommence ensuite. Lorsque les tronçons de tube et de gaine sont soudés, ils ne provoquent pas de détérioration de l'isolant thermique car celui-ci n'a été formé que jusqu'à une certaine distance de l'extrémité. Si par hasard, cet isolant était localement dégradé, il serait automatiquement remplacé lors de l'introduction de l'isolant du tronçon suivant de canalisation. De cette manière, la canalisation peut être formée sur de grandes longueurs. Lorsqu'un autre ancrage tel que 42 doit être soudé, les extrémités des tubes internes sont soudées l'une sur l'autre et il reste un certain espace entre les extrémités des tronçons de gaine. Il faut donc à ce moment rapporter deux demi-manchettes, de forme hémicylindrique, qui sont soudées à la fois longitudinalement l'une sur l'autre et transversalement aux autres tronçons de gaine. Des trous sont percés dans ces manchettes afin qu'un isolant thermique puisse aussi être introduit. Les trous sont ensuite bouchés.

Au fur et à mesure de sa construction, la canalisation, lorsqu'elle doit être placée au fond de la mer, est revêtue d'une couche de protection contre la corrosion, par exemple à base de bitume, du type couramment utilisé pour la protection des canalisations sous-marines. Un lest de béton, tel que représenté sur la figure 3, peut aussi entourer la gaine.

Bien qu'on ait décrit l'invention en référence à des dispositifs d'ancrage incorporés à des canalisations dans lesquelles le tube interne est en tension, elle convient aussi au cas inverse dans lequel c'est la gaine métallique qui est en tension et s'allonge. Ce cas se présente par exemple lors du transport de produits chauds.

De façon générale, les ancrages selon l'invention s'appliquent à toutes les canalisations dans lesquelles il est souhaitable que le tube interne et la gaine soient ancrés localement.

Il est bien entendu que l'invention n'a été décrite

14    0088706

et représentée qu'à titre d'exemple préférentiel et qu'on
pourra apporter toute équivalence technique dans ses éléments constitutifs sans pour autant sortir de son cadre.

REVENDICATIONS

1. Procédé de construction de canalisation isolante comprenant un tube interne (10) et une gaine (12) métalliques et concentriques séparés par un isolant thermique, caractérisé en ce qu'il comprend :

- la formation d'une amorce de canalisation constitué par un ancrage isolant de la gaine et du tube, cet ancrage isolant comportant au moins une butée interne (14) solidaire du tube (10) et distante de la gaine (12), au moins une butée externe (20) solidaire de la gaine (12) et distante du tube (10), les parties externes de la butée interne étant radialement à l'extérieur par rapport aux parties internes de la butée externe, et au moins un organe de compression (26) formé d'une matière possédant de bonnes propriétés d'isolation thermique et une bonne résistance à la compression, et disposé au contact des butées internes et externes (14, 20) suivant des surfaces sensiblement radiales, le tube de l'ancrage dépassant de la gaine du côté où la canalisation doit être construite,

- le raccordement d'un tronçon (44) de tube interne au tube interne (10) qui dépasse de l'ancrage,

- le raccordement d'un tronçon (46) de gaine à la gaine (12) de l'ancrage, concentriquement au tronçon de tube interne, le tronçon de gaine ayant sensiblement la même longueur que le tronçon de tube interne, si bien que ce dernier dépasse du tronçon de gaine,

- la formation d'uns isolation thermique entre le tronçon (44) de tube interne et le tronçon (48) de gaine, jusqu'à proximité de l'extrémité du tronçon de gaine, puis

- la répétition des opérations de raccordement de tronçons de tube interne et de gaine et de formation d'une isolation thermique,

- le raccordement, à l'extrémité du tronçon (44) de tube interne, du tube interne (10) d'un autre ancrage isolant analogue à l'ancrage isolant qui forme l'amorce de canalisation,

- le raccordement d'un tronçon de gaine en au moins deux parties à l'extrémité du tronçon (48) de gaine de la canalisation et à l'extrémité de la gaine (12) de l'ancrage, et

- la formation d'une isolation thermique entre le tube interne et le tronçon de gaine en au moins deux parties.

2. Procédé selon la revendication 1, caractérisé en ce que les opérations de raccordement sont effectuées par soudage.

3. Ancrage isolant d'un tube et d'une gaine métalliques et pratiquement concentriques, destiné à la mise en oeuvre du procédé selon l'une des revendications 1 et 2, caractérisé en ce qu'il comporte :

- une butée interne (14) solidaire du tube (10) et distante de la gaine (12),

- deux butées externes (20) solidaires de la gaine (12) et distantes du tube (10),

- les parties externes de la butée interne étant radialement à l'extérieur par rapport aux parties internes des butées externes, et

- deux organes de compression (26) formés d'une matière possédant de bonnes propriétés d'isolation thermique et une bonne résistance à la compression, et disposés chacun au contact de la butée interne et d'une butée externe (14, 20).

4. Ancrage isolant d'un tube et d'une gaine métalliques et pratiquement concentriques, destiné à la mise en oeuvre d'un procédé selon l'une des revendications 1 et 2, caractérisé en ce qu'il comprend :

- deux butées internes solidaires du tube et distantes de la gaine,

- une butée externe solidaire de la gaine et distante du tube,

- les parties externes des butées internes étant radialement à l'extérieur par rapport aux parties internes de la butée externe, et

- deux organes de compression formés d'une matière possédant de bonnes propriétés d'isolation thermique et une bonne résistance à la compression, et disposés au contact des butées internes et externe.

5. Ancrage selon l'une des revendications 3 et 4, caractérisé en ce que les surfaces de contact (16, 22, 28) de chaque organe de compression (26) avec une butée interne (14) ou une butée externe (20) sont des parties de surfaces ayant des génératrices sensiblement radiales.

6. Ancrage selon la revendication 5, caractérisé en ce que chaque surface de contact (16, 22, 28) d'un organe de compression (26) et d'une butée (14, 20) est comprise dans un plan transversal.

7. Ancrage selon l'une quelconque des revendications 3 à 6, caractérisé en ce que les butées interne et externe (14, 20) comportent chacune plusieurs secteurs de couronne circulaire, régulièrement espacés en direction circonférentielle, la totalité des secteurs d'une butée recouvrant au maximum 180°.

8. Ancrage selon l'une quelconque des revendications 3 à 6, caractérisé en ce que les butées (14, 20) et l'organe de compression (26) sont continus autour de la circonférence du tube (10) et de la gaine (12).

9. Ancrage selon l'une quelconque des revendications 3 à 8, caractérisé en ce que la matière possédant de bonnes propriétés d'isolation thermique et une bonne résistance à la compression, formant l'organe de compression (26), est constituée par une mousse syntactique.

10. Canalisation, du type qui comprend un tube (10) et une gaine (12) métalliques et pratiquement concentriques, séparés par un isolant thermique, caractérisée en ce qu'elle est réalisée par mise en oeuvre du procédé selon l'une des revendications 1 et 2 et comporte au moins deux ancrages isolants (42) destinés à résister aux contraintes longitudinales, et l'élément choisi parmi le tube (10) et la gaine (12) et qui est destiné à être le plus froid de ces deux éléments lors de l'utilisation prévue est formé d'un métal résilient à la température d'uti-

0088706

lisation.

11.     Canalisation selon la revendication 10, caractérisée en ce que les ancrages isolants sont des ancrages selon l'une quelconque des revendications 3 à 9.

12.     Canalisation selon l'une des revendications 10 et 11, caractérisée en ce que la gaine (12) comporte en outre, à l'extérieur, une couche (36) de protection contre la corrosion par le milieu marin, et un lest (36) à base de béton.

FIG. 1

FIG. 2

FIG. 10

FIG. 3

30   22   38

36

18   12

14   20

24

10

28  16  26  22  28

32

FIG. 4

12   26   20

FIG. 5

14   26   12   20

10

FIG. 6

12   26   14   40   26   12   20

10

20

FIG. 7

14   26   20   12

10

FIG. 8

20   26   14   50   12   26   20

10

FIG. 9

20   14   26'   20   26   14   26   20

26   46   51   50   10

## DOCUMENTS CONSIDERES COMME PERTINENTS

| Categorie | Citation du document avec indication, en cas de besoin, des parties pertinentes | Revendication concernee | CLASSEMENT DE LA DEMANDE (Int. Cl. 3) |
|---|---|---|---|
| D,A | US-A-4 219 224 (HANLEY)<br><br>*Colonne 4, ligne 36 - colonne 9, ligne 37; figure 6* | 1-6,8, 10,11 | F 16 L 59/14 |
| | --- | | |
| A | GB-A-1 186 058 (THERMAC INSULATIONS)<br>*Page 2, lignes 3-29; figure 1* | 1,3,5, 6,8 | |
| | --- | | |
| A | US-A-3 891 006 (LEE)<br>*Colonne 3, lignes 19-25* | 5-7 | |
| | --- | | |
| A | DE-A-2 114 046 (WESTERN TRADE TRUST)<br>*Page 1, ligne 17 - page 3, ligne 8* | 9 | |
| | --- | | DOMAINES TECHNIQUES RECHERCHES (Int. Cl. 3) |
| A | GB-A-2 027 158 (SALTER)<br>*Page 2, lignes 81-108* | 12 | F 16 L |
| | ----- | | |

Le présent rapport de recherche a été établi pour toutes les revendications

| Lieu de la recherche<br>LA HAYE | Date d'achèvement de la recherche<br>13-06-1983 | Examinateur<br>ATKINS J.F.C. |
|---|---|---|